# EUROPEAN PATENT SPECIFICATION

(11) **EP 1 738 070 B1**
(45) Date of publication and mention of the grant of the patent: **18.01.2012**
(21) Application number: 05741947.5
(22) Date of filing: 22.04.2005
(51) Int. Cl.: F03B 1/00

(54) **WATER CURRENT TURBINE WITH IMPROVED METHOD OF ACCESS**
WASSERSTROMTURBINE MIT VERBESSERTEM ZUGANGSVERFAHREN
TURBINE HYDRAULIQUE

(30) Priority: 22.04.2004 GB 0408939
(43) Date of publication of application: 03.01.2007
(73) Proprietor: Aquamarine Power Limited, Glasgow G2 5NJ (GB)
(72) Inventor: NICHOLAS, Peter, Weir Strachan & Henshaw, Bristol BS99 7TJ (GB); VEREL, Andrew, Weir Strachan & Henshaw, Bristol BS99 7TJ (GB)
(74) Representative: Docherty, Andrew John
(86) International application number: PCT/GB2005/001561
(87) International publication number: WO 2005/103484

(56) References cited:
- WO-A-00/50768
- WO-A-03/006825
- GB-A- 2 256 011
- GB-A- 2 311 566
- GB-A- 2 348 249
- US-A- 4 864 152
- FRAENKEL P L: "POWER FROM MARINE CURRENTS" PROCEEDINGS OF THE INSTITUTION OF MECHANICAL ENGINEERS. PART A, JOURNAL OF POWER AND ENERGY, MECHANICAL ENGINEERING PUBLICATIONS, SUFFOLK, GB, vol. 216, no. 1, PART A, 2002, pages 1-14, XP008026007 ISSN: 0957-6509

## Description

### FIELD OF INVENTION

The present invention relates to a water flow actuated turbine system and a method of accessing a turbine assembly as defined in the preambles on Claims 1 and 41, respectively. Such a system and a method are known from WO 00/50768.

### BACKGROUND OF INVENTION

Numerous efforts have been made to enable the efficient production of electricity without exploiting finite resources, such as fossil and nuclear fuels, which generate numerous environmental concerns. For example, techniques exist for extracting the kinetic energy from renewable resources such as flowing air or water. Such techniques include, for example, providing wind turbines to extract energy from the wind, and water turbines to extract energy from flowing water, such as a tidal stream. The turbines used in both cases may be of the same general form; the provision of a number of blades mounted about a shaft, wherein impingement of fluid on the blades produces the effect of lift which in turn produces a turning moment about the central axis of the shaft, resulting in shaft work. This shaft work may then be used to drive an electric generator.

Where water turbines are to be used for extracting energy from a tidal flow, considerations must be made in submerging and maintaining the turbines within the body of flowing water, and subsequently retrieving the turbines from the water for maintenance, replacement or the like. It is known in the art to provide a vertical column upstanding from the seabed, wherein one or more water turbine units are mounted on the column. The turbines may be mounted on the column by means of a sleeve which is axially displaceable lengthways of the column. Such an arrangement is disclosed in international patent application publication no. WO 00/50768, wherein the sleeve and turbine unit are axially displaceable using a rack and pinion arrangement. It is also known from WO 00/50768 to fix the turbine unit to a strut which is pivoted about a pinned joint on the column, such that the turbine unit may be raised by pivoting the strut about its pivot. However, it is apparent from WO 00/50768 that access to the turbines once in a raised position would be required to be made from a floating platform or other like structure, which is potentially hazardous for the personnel involved. Additionally, such access may prove difficult as the floating platform would; in effect, move relative to the turbine unit and strut

US 4,864,152 discloses a floating water current power station with a submerged turbine formation and a ring-shaped pontoon, the pontoon limiting the upward movement of the formation.

It is an object of the present invention to obviate or at least mitigate these and other problems with the prior art.

### SUMMARY OF INVENTION

According to a first aspect of the present invention, there is provided a water flow actuated turbine system comprising the features of claim 1.

Preferably, the upper portion of the support upon which the platform is mounted extends above the body of flowing water in which the support is partially submerged when in use.

Thus, in use, the elongate member may be pivoted to move the turbine assembly to its raised position where it is lifted clear of the body of water, with the elongate member and/or the turbine assembly being secured to the platform. This arrangement allows personnel to access the turbine assembly directly from the safety of the platform in order to carry out any required maintenance and repair work, or to remove the turbine assembly from the system. Once any work is completed, the elongate member and turbine assembly, or a replacement turbine assembly, may be released from the platform and submerged in the body of water for operational cooperation with the water flow by pivoting the elongate member in an opposite direction.

Preferably, the platform is adapted to accommodate the form of the turbine assembly such that full access to the turbine assembly may be achieved from the platform while the turbine assembly is located and secured in a raised position. This arrangement assists to ensure the safety of any personnel working with the turbine assembly.

Advantageously, at least one of the turbine assembly and elongate member is releasably secured relative to the platform by a latching mechanism, tether device, bolting arrangement or the like.

The elongate member is adapted to be releasably secured to the platform. Thus, the turbine assembly may be uncoupled and removed from the elongate member while said member is secured relative to the platform.

Advantageously, the turbine assembly may be releasably secured to the elongate member by a bolting arrangement, latching mechanism, tether device, pinned joint or the like. The elongate member may include a flange portion adapted to engage and support the turbine assembly.

Beneficially, the turbine assembly is adapted to be at least part uncoupled from the elongate member when at least one of the turbine assembly and elongate member is secured relative to the platform. This arrangement permits the elongate member to be pivoted to move the at least partly uncoupled turbine assembly towards the surface of the body of water, where the turbine assembly may be completely uncoupled from the elongate member for removal. Partly uncoupling the turbine assembly from the elongate member when in the raised position permits a large portion of the uncoupling procedure to be carried out from the platform, thus minimising the risk to personnel.

In a preferred embodiment of the present invention, the turbine assembly.is adapted to be coupled to the elongate member by a temporary connection during removal of the turbine assembly from the elongate member. In this arrangement, when at least one of the turbine assembly and elongate member is secured relative to the platform, the turbine assembly may be uncoupled from the elongate member and subsequently re-coupled thereto by the temporary connection. Once the temporary connection is in place the elongate member may be pivoted to move the turbine assembly towards the surface of the body of water, where the temporary connection may be disengaged to release the turbine assembly from the elongate member. Preferably, the temporary connection is a quick release connection. Advantageously, the temporary connection may incorporate a clamping arrangement, latching mechanism or the like.

Preferably, the turbine assembly includes a rotor unit carrying a plurality of blades, and a generator coupled to the rotor unit Thus, when the turbine assembly is located within a flow of water, the resulting lift forces acting on the blades will cause rotation of the rotor which in turn will drive the generator to produce electrical current. The generator may be directly driven by the rotor. Alternatively, the turbine assembly may further include speed increasing transmission means located between the rotor and the generator in order to increase the rotational output from the rotor caused by a flow of water, to a level suitable for driving the generator to produce a satisfactory electrical current. The speed increasing transmission means may be a mechanical gearbox or a hydraulic transmission system or the like.

Preferably, the turbine assembly further comprises a mechanism for controlling the pitch of the blades with respect to the direction of flow of water in which the turbine assembly is submerged when in use. Advantageously, the pitch control mechanism is adapted to selectively position the blades to present a leading edge of each blade into the flow. Effective control of the pitch of the blades allows the turbine assembly to operate in conditions where the direction of water flow is not consistent, such as is the case with tidal flow where the direction of flow is cyclically reversed in accordance with flow and ebb tides. Preferably, a control system is provided to ensure an optimum blade pitch is achieved and maintained; that is, the angle of attack of the blades is selectively controlled to maximise the speed of the generator over a full range of flow velocities and directions. Preferably, the control system also utilises an AC motor drive system to manage the generator torque thus ensuring the optimum power balance is achieved.

Preferably, the turbine assembly is contained within a single bulb or nacelle. Advantageously, the bulb or nacelle is hydrodynamically formed in order to minimise the effects of drag forces imparted on the turbine system.

Preferably, any electrical current produced by the generator is carried along suitable conducting cables which may extend from the turbine assembly and through or along the elongate member. The conducting cables may also extend through or along the length of the support. Advantageously, the conducting cables may extend along the floor of the body of water (hereinafter referred to as 'seabed' for convenience) to a suitable location such as an on shore electrical substation or the like.

Advantageously, the column support is adapted to be directly mounted on a seabed. Alternatively, the support may be adapted to be embedded within a seabed. For example, the support may be locatable within a socket embedded into the seabed. Alternatively further, the support may be or form part of a floating structure. This may be advantageous where the turbine system is to be located in a relatively deep body of water.

Preferably, the system further comprises a float arrangement adapted to cause the elongate member to pivot on the support. Advantageously, the float arrangement may comprise a float member, preferably located within the support. In an alternative embodiment the float member may be located outwith the support member. Preferably, a rigging system is secured between the float member and at least one of the elongate arm and turbine assembly. More preferably, the rigging system is secured between the float member and the elongate member. The rigging system may comprise a chain, wire rope or the like.

Preferably, in use, lowering of the float member relative to the support causes the elongate member to pivot to move the turbine assembly towards the raised position, and raising the float member relative to the support causes the elongate member to pivot to move the turbine assembly towards the lowered position.

In a preferred embodiment of the present invention, the float arrangement comprises a pumping system to effect raising and lowering of the float member in a controlled manner. Advantageously, the pumping system is adapted to pump water into and from the float member to vary the buoyancy thereof. Preferably, the float member is positioned within the support and the pumping arrangement is adapted to displace water from within the support and into the float member, and vice versa, in order to raise and lower said float member.

Advantageously, the float arrangement may be accessed from a suitable entry point in the support, preferably gained from the platform. Thus, substantially full maintenance of the turbine system may be achieved from the safety of the platform.

In an alternative embodiment, the elongate member may be caused to pivot on the support by a winch arrangement. Conveniently, the winch arrangement may include a winching mechanism such as a motor, and a rigging system secured between the winching mechanism and the elongate arm. Advantageously, the rigging system is coupled to the elongate arm at any suitable position along the length thereof. Preferably, the winching mechanism and required control systems and the like are housed within the support. Advantageously, the winching mechanism may be accessed from a suitable entry point in the support, preferably gained from the platform.

Preferably, the turbine assembly may be raised, or at least partially raised by selectively controlling the buoyancy of the turbine assembly, such that the turbine assembly may be 'floated' to the surface of the body of water in which it is located when in use. The turbine assembly may comprise one or more buoyancy chambers adapted to be selectively filled with and emptied of water. Advantageously, a pumping assembly may be utilised to fill or empty the one or more buoyancy chambers. Alternatively, or additionally, water may be displaced from the one or more buoyancy chambers by air pressure.

In a preferred embodiment, the turbine system further comprises a turbine assembly supporting structure, preferably mounted on at least one of the elongate member and turbine assembly, wherein the turbine assembly supporting structure abuts against the support when the turbine assembly is located in a lowered position. Advantageously, the turbine assembly supporting structure is adapted to be locked against the support to prevent unintentional separation caused by, for example, larger water flow rates. Preferably, the turbine assembly supporting structure is locked against the support by a locking mechanism controlled from, for example, the region of the platform.

In an alternative embodiment, the turbine system may further comprise a turbine assembly supporting structure, mounted on the support, wherein the turbine assembly abuts against and becomes at least partially supported by the turbine assembly supporting structure when the turbine assembly is located in a lowered position. Advantageously, the turbine assembly is adapted to be locked against the supporting structure to prevent unintentional separation. The turbine assembly may be locked against the supporting structure by a locking mechanism.

In a preferred embodiment of the present invention, the turbine assembly includes two elongate members and associated turbine assemblies.

Preferably, the turbine system is a tidal flow turbine system.

According to a second aspect of the present invention, there is provided a method of accessing a turbine assembly of a water flow actuated turbine system comprising the features of claim 41.

Preferably, the elongate member is pivoted by raising and lowering of a float member coupled to at least one of the elongate member and turbine assembly by a rigging system.

Preferably, the method further comprises the step of varying the buoyancy of the turbine assembly to assist to move said turbine assembly towards the raised position.

### BRIEF DESCRIPTION OF THE DRAWING

These and other aspects of the present invention will now be described, by way of example only, with reference to the accompanying drawings, in which:
Figure 1 is a diagrammatic representation of a turbine system in accordance with one embodiment of the present invention; and
Figure 2 is a diagrammatic representation of a turbine system in accordance with an alternative embodiment of the present invention.

### DETAILED DESCRIPTION OF THE DRAWING

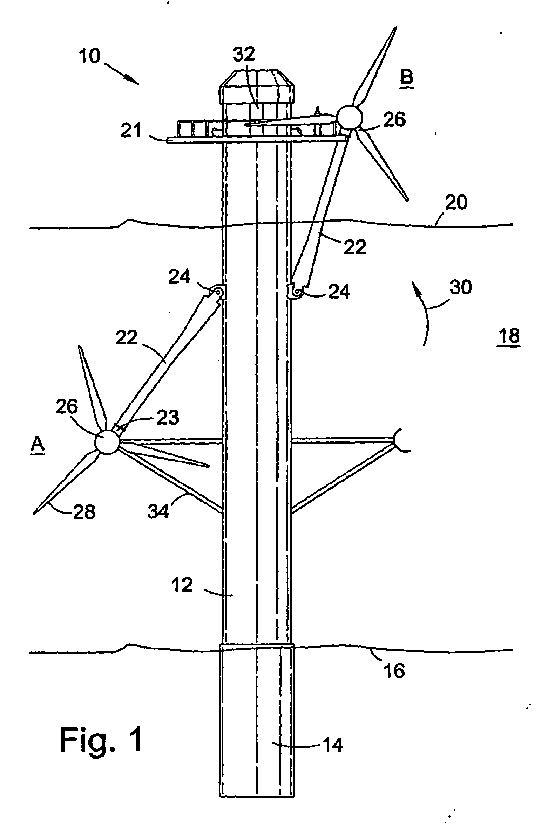

Referring to Figure 1, there is shown a turbine system, generally indicated by reference numeral 10, in accordance with one embodiment of the present invention, for use in converting the kinetic energy in a tidal flow to electrical energy. The turbine system 10 comprises a column support 12 located in a socket 14 which is embedded into the bed 16 of a body of water 18. The body of water 18 may be any body of water subject to tidal flow. A platform 21 is mounted on the upper portion of the column support 12, above the surface 20 of the water 18.

The turbine system 10 further comprises a pair of elongate members or pylons 22, each of which are pivotally coupled at one end to the column support 12 at respective hinges 24, and support a turbine assembly 26 at the opposite end via respective flange portions 23. Each turbine assembly 26 includes a rotor unit carrying a plurality of blades 28, and a generator (not shown) coupled to the rotor unit via a gear box (not shown). Thus, when a turbine assembly 26 is located within the body of water 18, the tidal flow produces lift forces which act on the blades 28 causing rotation of the rotor which in turn will drive the generator to produce electrical current Each turbine assembly 26 further comprises a mechanism (not shown) for controlling the pitch of the blades 28 with respect to the direction of flow of water. A control system (not shown) is also provided to ensure an optimum blade pitch is maintained; that is, the angle of attack of the blades 28 is selectively controlled to optimise the speed of the generator over a full range of tidal flow velocities and directions.

Each turbine assembly 26 may be raised from the body of water 18 by pivoting the pylon 22 against its hinge 24 in the direction of arrow 30. In this way, the turbine assembly 26 may be moved from position A to position B, where the turbine assembly 26 is lifted clear of the body of water 18. Once in a raised position (position B), the pylon 22 is secured to the platform 21 by a suitable mechanism (not shown). This arrangement allows personnel to access the turbine assembly 26 directly from the safety of the platform 21 in order to carry out any required maintenance and repair work. Once any work is completed, the pylon 22 may be released from the platform 21 and re-submerged in the body of water 18 for operational cooperation with the water flow, by pivoting the pylon 22 in a reverse direction.

The platform 21 is adapted to accommodate the form of the turbine assembly 26 such that full access to the turbine assembly 26 may be achieved from the platform 21 while the turbine assembly is located and secured in a raised position. This arrangement assists to ensure the safety of any personnel working with the turbine assembly 26.

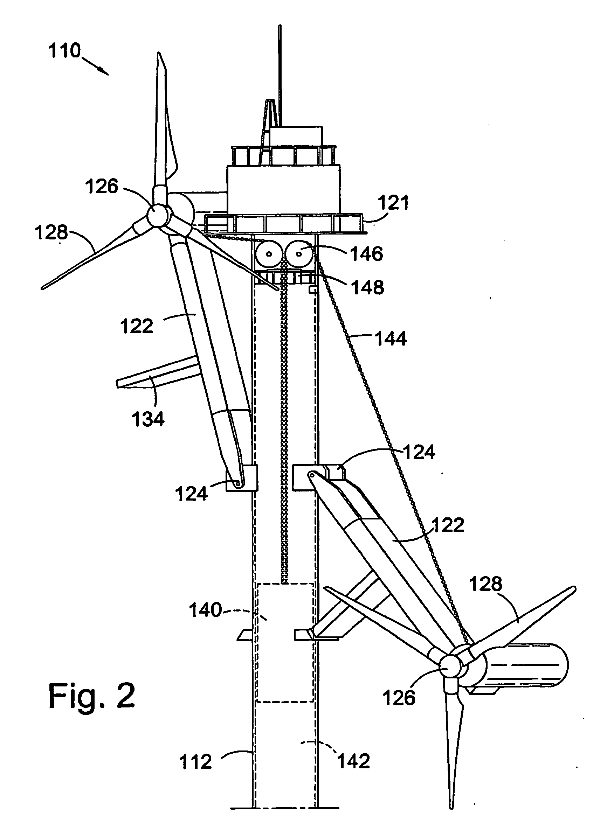

In the embodiment shown, the pylons 22 and respective turbine assemblies 26 are caused to pivot by a float arrangement (not shown), which will be described in detail below with reference to Figure 2.

The turbine system 10 further comprises turbine assembly support structures 34, which in the embodiment shown are mounted on the column 12, wherein, as shown, each turbine assembly 26 abuts against and becomes at least partially supported by a support structure 34 when the turbine assembly 26 is located in a lowered position (position A). Each turbine assembly 26 is locked against a respective support structure 34 to prevent unintentional separation caused by, for example, larger water flow rates. Each turbine assembly 26 is locked against the supporting structure by a locking mechanism (not shown) controlled from the region of the platform 21.

Reference is now made to Figure 2 of the drawings in which there is shown a turbine system, generally indicated by reference numeral 110, in accordance with an alternative embodiment of the present invention. It should be noted that turbine system 110 is similar to that shown in Figure 1, and as such like components share like reference numerals, preceded by a '1'.

The turbine system 110 comprises a column 112 which supports a platform 121 on an upper portion thereof. A pair of pylons 122 are pivotally coupled at one end to the column 112 at respective hinges 124, and support a respective turbine assembly 126 at the opposite end. Each turbine assembly 126 includes a rotor unit carrying a plurality of blades for driving the rotor unit, and associated generator (not shown), when the turbine assembly 126 is positioned within a moving body of water.

In the same manner as described above with reference to the system 10 shown in Figure 1, each turbine assembly 126 may be raised from and lowered into a body of water by pivoting the associated pylon 122 against its hinge 124. When in a fully raised position, as shown on the left hand side in Figure 2, the pylon 122 and turbine assembly 126 are secured relative to the platform 121.

The turbine system 110 incorporates a float arrangement for use in assisting to raise and lower the pylons 122 and associated turbine assemblies 126. The float arrangement comprises a float member 140 located within the column 112, wherein the column 112 contains a volume of water 142 which the float member is adapted to be submerged within to varying degrees.

A length of chain 144 extends between each pylon 122 and the float member 140 and passes over a respective fairlead 146 positioned in an upper portion of the column 112. The arrangement is such that when the float member 140 is lowered within the column 112, the pylons 122 and associated turbine assemblies 126 will be moved towards a raised position, and vice versa. When the elongate member 122 is in a raised position, the float member 140 and chain 144 act to retain the elongate member 122 in said raised position until suitably secured to the platform.

The float arrangement comprises a pumping system which incorporates a pump unit 148 adapted to selectively displace water from within the column 112 and into the float member 140, and vice versa, in order to vary the effective buoyancy and weight of the float member 140 to cause said float member 140 to be raised and lowered within the column 112.

In the embodiment shown, each turbine assembly 126 comprises a buoyancy chamber (not shown) which is adapted to be selectively filled with varying proportions of air and water to vary the effective buoyancy of each assembly 126. This arrangement permits the effective buoyancy of the turbine assemblies 126 to be increased to cause the assemblies to be 'floated' to the surface of the body of water in which the system 110 is located, and thus towards the raised position. This chamber also enables the nacelle to be floated, with or without additional floatation devices, away from the system 110 for maintenance, replacement or the like. In the preferred arrangement shown, once a turbine assembly 126 has been raised to the surface of the body of water by the effect of buoyancy, the float arrangement then raises the turbine assembly 126 from the surface of the body of water to the fully raised position in which the pylon 122 is secured to the platform 121.

The turbine system 110 further comprises turbine assembly support structures 134 mounted on each pylon 122, wherein each support structure 134 abuts against and becomes at least partially supported by the column 112. Each turbine assembly support structure 134 is locked against the column 112 by a locking mechanism (not shown) controlled from the region of the platform 121.

It should be understood that the embodiments described are merely exemplary of the present invention and that various modifications may be made thereto if without departing from the scope of the invention as defined in the following claims. For example, the column may be directly mounted on the surface of the seabed, or may be, or form part of, a floating structure. Additionally, a winching arrangement may be utilised to raise and lower the turbine assemblies. Furthermore, the pylons may incorporate buoyancy chambers to be used in assisting to raise and lower the turbine assemblies.

## Claims

1. A water flow actuated turbine system (10) comprising:
a column support (12) adapted to be partially and vertically submerged within a body of flowing water (18);
a platform (21) mounted on an upper portion of the column support (12); and
an elongate member (22) supporting a turbine assembly (26),
**characterised in that** said elongate member (22) supports the turbine assembly (26) at one end and is pivotally coupled at an opposite end to the column support (12), the elongate member (22) being pivotable to move the turbine assembly (26) between a raised position above the body of water (18) and a lowered position,
wherein means are provided such that at least one of the turbine assembly (26) and elongate member (22) is adapted to be releasably secured relative to the platform (21) when the turbine assembly (26) is located in the raised position.

2. The system (10) of claim 1, wherein the upper portion of the column support (12) upon which the platform (21) is mounted extends above the body of flowing water (18) in which the column support (12) is partially submerged when in use.

3. The system (10) of claim 1 or 2, wherein the platform (21) is adapted to accommodate the form of the turbine assembly (26).

4. The system (10) of claim 1, 2 or 3, wherein at least one of the turbine assembly (26) and elongate member (22) is releasably secured relative to the platform (21) by a latching mechanism.

5. The system (10) of claim 1, 2 or 3, wherein at least one of the turbine assembly (26) and elongate member (22) is releasably secured relative to the platform (21) by a bolting arrangement.

6. The system (10) of any preceding claim, wherein the elongate member (22) is adapted to be releasably secured relative to the platform (21).

7. The system (10) of any preceding claim, wherein the turbine assembly (26) is releasably secured to the elongate member (22) by a bolting arrangement.

8. The system (10) of any one of claims 1 to 6, wherein the turbine assembly (26) is releasably secured to the elongate member (22) by a latching mechanism.

9. The system (10) of any one of claims 1 to 6, wherein the turbine assembly (26) is releasably secured to the elongate member (22) by a pinned joint.

10. The system (10) of any preceding claim, wherein the elongate member (22) includes a flange portion (23) adapted to engage and support the turbine assembly (26).

11. The system (10) of any preceding claim, wherein the turbine assembly (26) is adapted to be at least part uncoupled from the elongate member (22) when at least one of the turbine assembly (26) and elongate member (22) is secured relative to the platform (21).

12. The system (10) of any preceding claim, wherein the turbine assembly (26) is adapted to be coupled to the elongate member (22) by a temporary connection during removal of the turbine assembly (26) from the elongate member (22).

13. The system (10) of claim 12, wherein the temporary connection is a quick release connection.

14. The system (10) of claim 12 or 13, wherein the temporary connection incorporates a clamping arrangement.

15. The system (10) of any preceding claim, wherein the turbine assembly (26) includes a rotor unit carrying a plurality of blades (28), and a generator coupled to the rotor unit.

16. The system (10) of claim 15, wherein the generator is directly driven by the rotor.

17. The system (10) of claim 15, wherein the turbine assembly (26) includes speed increasing transmission means located between the rotor and the generator

18. The system (10) of claim 15, 16 or 17, wherein the turbine assembly (26) further comprises a mechanism for controlling the pitch of the blades (28) with respect to the direction of flow of water in which the turbine assembly (28) is submerged when in use.

19. The system (10) of claim 18, wherein a control system is provided to ensure an optimum blade pitch is achieved and maintained.

20. The system (10) of claim 19, wherein the control system comprises an AC motor drive system adapted to optimise the output of the generator.

21. The system (10) of any preceding claim, wherein the column support (12) is adapted to be directly mounted on a seabed.

22. The system (10) of any one of claims I to 20, wherein the column support (12) is adapted to be embedded within a seabed.

23. The system (10) of any one of claims I to 20, wherein the column support (12) forms part of a floating structure.

24. The system (10) of any preceding claim, further comprising a float arrangement adapted to cause the elongate member (22) to pivot on the column support (12).

25. The system (10) of claim 24, wherein the float arrangement comprises a float member (140).

26. The system (10) of claim 25, wherein the float member (140) is located within the column support (12).

27. The system (10) of claim 25 or 26, wherein a rigging system is secured between the float member (140) and at least one of the elongate arm (22) and turbine assembly (26).

28. The system (10) of claim 25, 26 or 27, wherein, in use, lowering of the float member (140) relative to the column support (12) causes the elongate member (22) to pivot to move the turbine assembly (26) towards the raised position, and raising the float member (140) relative to the column support (12) causes the elongate member (22) to pivot to move the turbine assembly (26) towards the lowered position.

29. The system (10) of any one of claims 24 to 28, wherein the float arrangement comprises a pumping system to effect raising and lowering of the float member (140).

30. The system (10) of claim 29, wherein the pumping system is adapted to pump water into and from the float member (140) to vary the buoyancy thereof.

31. The system (10) of claim 30, wherein the float member (140) is positioned within the column support (12) and the pumping arrangement is adapted to displace water from within the column support (12) and into the float member (140), and vice versa, in order to raise and lower said float member (140).

32. The system (10) of any preceding claim, wherein the turbine assembly (26) is at least partially raised by selectively controlling the buoyancy of the turbine assembly (26).

33. The system (10) of claim 32, wherein the turbine assembly (26) comprises one or more buoyancy chambers adapted to be selectively filled with and emptied of water.

34. The system (10) of any preceding claim, wherein the buoyancy of the turbine assembly (26) is controllable to permit said turbine assembly (26) to be transmitted by a suitable towing vessel.

35. The system (10) of any preceding claim, wherein the turbine assembly (26) is adapted to be secured to at least one floatation device to permit said turbine assembly (26) to be transported by a suitable towing vessel.

36. The system (10) of any preceding claim, further comprising a turbine assembly supporting structure mounted on at least one of the elongate member (22) and turbine assembly (26), wherein the turbine assembly supporting structure abuts against the column support (12) when the turbine assembly (26) is located in a lowered position.

37. The system (10) of claim 36, wherein the turbine assembly supporting structure is adapted to be locked against the column support (12).

38. The system (10) of any one of claims 1 to 35, further comprising a turbine assembly supporting structure mounted on the column support (12) wherein the turbine assembly (26) abuts against and becomes at least partially supported by the turbine assembly supporting structure when the turbine assembly (26) is located in a lowered position.

39. The system (10) of any preceding claim, comprising two elongate members (22) and associated turbine assemblies (26).

40. The system (10) of any preceding claim, wherein the turbine system (26) is a tidal flow turbine system.

41. A method of accessing a turbine assembly (26) of a water flow actuated turbine system comprising a column support (12) partially and vertically submerged within a body of flowing water (18), a platform (21) mounted on an upper portion of the column support (12) extending above the body of water (18), and an elongate member (22) supporting the turbine assembly (26) at one end and being pivotally coupled at an opposite end to the column support (12), the method comprising the steps of:
pivoting the elongate member (22) to move the turbine assembly (26) from a lowered position to a raised position above the body of water (18); and
securing at least one of the elongate member (22) and turbine assembly (26) relative to the platform (21).

42. The method of claim 41, wherein the elongate member (22) is pivoted by raising and lowering of a float member (140) coupled to at least one of the elongate member (22) and turbine assembly (26) by a rigging system.

43. The method of claim 41 or 42, further comprising the step of varying the buoyancy of the turbine assembly (26) to assist to move said turbine assembly (26) towards the raised position.

## Patentansprüche

1. Wasserstromturbinenanlage (10), die aufweist:
eine Säulenstütze (12), die so ausgebildet ist, dass sie teilweise und vertikal innerhalb einer strömenden Wassermasse (18) untergetaucht wird;
eine Plattform (21), die an einem oberen Abschnitt der Säulenstütze (12) montiert ist; und
ein längliches Element (22), das eine Turbinenbaugruppe (26) trägt,
**dadurch gekennzeichnet, dass** das längliche Element (22) die Turbinenbaugruppe (26) an einem Ende trägt und an einem entgegengesetzten Ende zur Säulenstütze (12) drehbar verbunden ist, wobei das längliche Element (22) drehbar ist, um die Turbinenbaugruppe (26) zwischen einer angehobenen Position über der Wassermasse (18) und einer abgesenkten Position zu bewegen,
wobei Einrichtungen derart vorhanden sind, dass mindestens eines von Turbinenbaugruppe (26) und länglichem Element (22) so ausgebildet ist, dass sie relativ zur Plattform (21) lösbar gesichert wird, wenn die Turbinenbaugruppe (26) in der angehobenen Position angeordnet wird.

2. Anlage (10) nach Anspruch 1, bei der sich der obere Abschnitt der Säulenstütze (12), an dem die Plattform (21) montiert ist, über der strömenden Wassermasse (18) erstreckt, in der die Säulenstütze (12) teilweise untergetaucht wird, wenn sie in Betrieb ist.

3. Anlage (10) nach Anspruch 1 oder 2, bei der die Plattform (21) so ausgebildet ist, dass sie sich an die Form der Turbinenbaugruppe (26) anpasst.

4. Anlage (10) nach Anspruch 1, 2 oder 3, bei der mindestens eines von Turbinenbaugruppe (26) und länglichem Element (22) relativ zur Plattform (21) mittels eines Sperrmechanismus lösbar gesichert ist.

5. Anlage (10) nach Anspruch 1, 2 oder 3, bei der mindestens eines von Turbinenbaugruppe (26) und länglichem Element (22) relativ zur Plattform (21) mittels einer Verschraubungsanordnung lösbar gesichert ist.

6. Anlage (10) nach einem der vorhergehenden Ansprüche, bei der das längliche Element (22) so ausgebildet ist, dass es relativ zur Plattform (21) lösbar gesichert wird.

7. Anlage (10) nach einem der vorhergehenden Ansprüche, bei der die Turbinenbaugruppe (26) am länglichen Element (22) mittels einer Verschraubungsanordnung lösbar gesichert ist.

8. Anlage (10) nach einem der Ansprüche 1 bis 6, bei der die Turbinenbaugruppe (26) am länglichen Element (22) mittels eines Sperrmechanismus lösbar gesichert ist.

9. Anlage (10) nach einem der Ansprüche 1 bis 6, bei der die Turbinenbaugruppe (26) am länglichen Element (22) mittels eines Gelenkes lösbar gesichert ist.

10. Anlage (10) nach einem der vorhergehenden Ansprüche, bei der das längliche Element (22) einen Flanschabschnitt (23) umfasst, der ausgebildet ist, um mit der Turbinenbaugruppe (26) in Eingriff zu kommen und sie zu tragen.

11. Anlage (10) nach einem der vorhergehenden Ansprüche, bei der die Turbinenbaugruppe (26) so ausgebildet ist, dass sie mindestens zum Teil vom länglichen Element (22) getrennt wird, wenn mindestens eines von Turbinenbaugruppe (26) und länglichem Element (22) relativ zur Plattform (21) gesichert wird.

12. Anlage (10) nach einem der vorhergehenden Ansprüche, bei der die Turbinenbaugruppe (26) so ausgebildet ist, dass sie mit dem länglichen Element (22) mittels einer provisorischen Verbindung während des Entfernens der Turbinenbaugruppe (26) vom länglichen Element (22) verbunden wird.

13. Anlage (10) nach Anspruch 12, bei der die provisorische Verbindung eine schnell lösbare Verbindung ist.

14. Anlage (10) nach Anspruch 12 oder 13, bei der die provisorische Verbindung eine Klemmanordnung einschließt.

15. Anlage (10) nach einem der vorhergehenden Ansprüche, bei der die Turbinenbaugruppe (26) umfasst: eine Rotoranlage, die eine Vielzahl von Blättern (28) trägt; und einen Generator, der mit der Rotoranlage verbunden ist.

16. Anlage (10) nach Anspruch 15, bei der der Generator direkt vom Rotor angetrieben wird.

17. Anlage (10) nach Anspruch 15, bei der die Turbinenbaugruppe (26) eine Erhöhungsgetriebeeinrichtung umfasst, die zwischen dem Rotor und dem Generator angeordnet ist.

18. Anlage (10) nach Anspruch 15, 16 oder 17, bei der die Turbinenbaugruppe (26) außerdem einen Mechanismus für das Steuern der Teilung der Blätter (28) mit Bezugnahme auf die Richtung des Wasserstromes aufweist, in dem die Turbinenbaugruppe (26) untergetaucht wird, wenn sie in Betrieb ist.

19. Anlage (10) nach Anspruch 18, bei der ein Steuersystem vorhanden ist, um zu sichern, dass eine optimale Blattteilung erreicht und beibehalten wird.

20. Anlage (10) nach Anspruch 19, bei der das Steuersystem ein Wechselstrommotorantriebssystem aufweist, das ausgebildet ist, um den Ausgang des Generators zu optimieren.

21. Anlage (10) nach einem der vorhergehenden Ansprüche, bei der die Säulenstütze (12) so ausgebildet ist, dass sie direkt auf dem Meeresboden montiert wird.

22. Anlage (10) nach einem der Ansprüche 1 bis 20, bei der die Säulenstütze (12) so ausgebildet ist, dass sie innerhalb des Meeresbodens eingebettet wird.

23. Anlage (10) nach einem der Ansprüche 1 bis 20, bei der die Säulenstütze (12) einen Teil einer Schwimmkonstruktion bildet.

24. Anlage (10) nach einem der vorhergehenden Ansprüche, die außerdem eine Schwimmanordnung aufweist, die ausgebildet ist, um zu bewirken, dass sich das längliche Element (22) an der Säulenstütze (12) dreht.

25. Anlage (10) nach Anspruch 24, bei der die Schwimmanordnung ein Schwimmelement (140) aufweist.

26. Anlage (10) nach Anspruch 25, bei der das Schwimmelement (140) innerhalb der Säulenstütze (12) angeordnet ist.

27. Anlage (10) nach Anspruch 25 oder 26, bei der ein Verankerungssystem zwischen dem Schwimmelement (140) und mindestens einem von länglichem Arm (22) und Turbinenbaugruppe (26) gesichert ist.

28. Anlage (10) nach Anspruch 25, 26 oder 27, bei der, wenn sie in Betrieb ist, ein Absenken des Schwimmelementes (140) relativ zur Säulenstütze (12) bewirkt, dass sich das längliche Element (22) dreht, um die Turbinenbaugruppe (26) in Richtung der angehobenen Position zu bewegen, und ein Anheben des Schwimmelementes (140) relativ zur Säulenstütze (12) bewirkt, dass sich das längliche Element (22) dreht, um die Turbinenbaugruppe (26) in Richtung der abgesenkten Position zu bewegen.

29. Anlage (10) nach einem der Ansprüche 24 bis 28, bei der die Schwimmanordnung ein Pumpsystem aufweist, um das Anheben und Absenken des Schwimmelementes (140) zu bewirken.

30. Anlage (10) nach Anspruch 29, bei der das Pumpsystem ausgebildet ist, um Wasser in das und aus dem Schwimmelement (140) zu pumpen, um dessen Schwimmfähigkeit zu variieren.

31. Anlage (10) nach Anspruch 30, bei der das Schwimmelement (140) innerhalb der Säulenstütze (12) positioniert und die Pumpanordnung ausgebildet ist, um Wasser aus der Säulenstütze (12) heraus und in das Schwimmelement (140) hinein zu verdrängen und umgekehrt, um das Schwimmelement (140) anzuheben und abzusenken.

32. Anlage (10) nach einem der vorhergehenden Ansprüche, bei der die Turbinenbaugruppe (26) mindestens teilweise durch selektives Steuern der Schwimmfähigkeit der Turbinenbaugruppe (26) angehoben wird.

33. Anlage (10) nach Anspruch 32, bei der die Turbinenbaugruppe (26) eine oder mehrere Schwimmkammern aufweist, die so ausgebildet sind, dass sie selektiv mit Wasser gefüllt und davon geleert werden.

34. Anlage (10) nach einem der vorhergehenden Ansprüche, bei der die Schwimmfähigkeit der Turbinenbaugruppe (26) steuerbar ist, um zu gestatten, dass die Turbinenbaugruppe (26) mittels eines geeigneten Schleppschiffes befördert wird.

35. Anlage (10) nach einem der vorhergehenden Ansprüche, bei der die Turbinenbaugruppe (26) so ausgebildet ist, dass sie an mindestens einer Schwimmvorrichtung gesichert wird, um zu gestatten, dass die Turbinenbaugruppe (26) mittels eines geeigneten Schleppschiffes transportiert wird.

36. Anlage (10) nach einem der vorhergehenden Ansprüche, die außerdem eine Stützkonstruktion für die Turbinenbaugruppe aufweist, die an mindestens einem von länglichem Element (22) und Turbinenbaugruppe (26) montiert ist, wobei die Stützkonstruktion für die Turbinenbaugruppe an die Säulenstütze (12) anstößt, wenn die Turbinenbaugruppe (26) in einer abgesenkten Position angeordnet wird.

37. Anlage (10) nach Anspruch 36, bei der die Stützkonstruktion für die Turbinenbaugruppe so ausgebildet ist, dass sie an der Säulenstütze (12) verriegelt wird.

38. Anlage (10) nach einem der Ansprüche 1 bis 35, die außerdem eine Stützkonstruktion für die Turbinenbaugruppe aufweist, die an der Säulenstütze (12) montiert ist, wobei die Turbinenbaugruppe (26) an die Stützkonstruktion für die Turbinenbaugruppe anstößt und mindestens teilweise davon getragen wird, wenn die Turbinenbaugruppe (26) in einer abgesenkten Position angeordnet wird.

39. Anlage (10) nach einem der vorhergehenden Ansprüche, die zwei längliche Elemente (22) und die dazugehörenden Turbinenbaugruppen (26) aufweist

40. Anlage (10) nach einem der vorhergehenden Ansprüche, bei der das Turbinensystem (26) ein Gezeitenflussturbinensystem ist.

41. Zugangsverfahren zu einer Turbinenbaugruppe (26) einer Wasserstromturbinenanlage, die aufweist: eine Säulenstütze (12), die teilweise und vertikal innerhalb einer strömenden Wassermasse (18) untergetaucht ist; eine an einem oberen Abschnitt der Säulenstütze (12) montierte Plattform (21), die sich über der Wassermasse (18) erstreckt; und ein längliches Element (22), das die Turbinenbaugruppe (26) an einem Ende trägt und drehbar an einem entgegengesetzten Ende mit der Säulenstütze (12) verbunden ist, wobei das Verfahren die folgenden Schritte aufweist:
Drehen des länglichen Elementes (22), um die Turbinenbaugruppe (26) aus einer abgesenkten Position in eine angehobene Position über der Wassermasse (18) zu bewegen; und
Sichern von mindestens einem von länglichem Element (22) und Turbinenbaugruppe (26) relativ zur Plattform (21).

42. Verfahren nach Anspruch 41, bei dem das längliche Element (22) durch Anheben und Absenken eines Schwimmelementes (140) gedreht wird, das mit mindestens einem von länglichem Element (22) und Turbinenbaugruppe (26) mittels eines Verankerungssystems verbunden ist.

43. Verfahren nach Anspruch 41 oder 42, das außerdem den Schritt des Veränderns der Schwimmfähigkeit der Turbinenbaugruppe (26) aufweist, um das Bewegen der Turbinenbaugruppe (26) in Richtung der angehobenen Position zu unterstützen.

## Revendications

1. Système de turbine actionnée par un écoulement d'eau (10), comprenant :
un support de colonne (12), adapté pour être immergé partiellement et verticalement dans un plan d'eau en écoulement (18) ;
une plate-forme (21) montée sur une partie supérieure du support de colonne (12) ; et
un élément allongé (22), supportant un assemblage de turbine (26) ;
**caractérisé en ce que** ledit élément allongé (22) supporte l'assemblage de turbine (26) au niveau d'une extrémité, et est accouplé de manière pivotante au niveau d'une extrémité opposée au support de colonne (12), l'élément allongé (22) pouvant pivoter pour déplacer l'assemblage de turbine (26) entre une position surélevée au-dessus du plan d'eau (18) et une position abaissée ;
des moyens étant prévus pour assurer qu'au moins un élément, l'assemblage de turbine (26) ou l'élément allongé (22), est adapté pour être fixé de manière amovible par rapport à la plate-forme (21) lorsque l'assemblage de turbine (26) est agencé dans la position surélevée.

2. Système (10) selon la revendication 1, dans lequel la partie supérieure du support de colonne (12), sur laquelle est montée la plate-forme (21), s'étend au-dessus du plan d'eau en écoulement (18), dans lequel le support de colonne (12) est partiellement immergé en service.

3. Système (10) selon les revendications 1 ou 2, dans lequel la plate-forme (21) est adaptée pour s'adapter à la forme de l'assemblage de turbine (26).

4. Système (10) selon les revendications 1, 2 ou 3, dans lequel au moins un élément, l'assemblage de turbine (26) ou l'élément allongé (22), est fixé de manière amovible par rapport à la plate-forme (21) par un mécanisme de verrouillage.

5. Système (10) selon les revendications 1, 2 ou 3, dans lequel au moins un élément, l'assemblage de turbine (26) ou l'élément allongé (22), est fixé de manière amovible par rapport à la plate-forme (21) par un dispositif de boulonnage.

6. Système (10) selon l'une quelconque des revendications précédentes, dans lequel l'élément allongé (22) est adapté pour être fixé de manière amovible par rapport à la plate-forme (21).

7. Système (10) selon l'une quelconque des revendications précédentes, dans lequel l'assemblage de turbine (26) est fixé de manière amovible sur l'élément allongé (22) par un dispositif de boulonnage.

8. Système (10) selon l'une quelconque des revendications 1 à 6, dans lequel l'assemblage de turbine (26) est fixé de manière amovible sur l'élément allongé (22) par un mécanisme de verrouillage.

9. Système (10) selon l'une quelconque des revendications 1 à 6, dans lequel l'assemblage de turbine (26) est fixé de manière amovible sur l'élément allongé (22) par un joint goupillé.

10. Système (10) selon l'une quelconque des revendications précédentes, dans lequel l'élément allongé (22) englobe une partie de bride (23), adaptée pour s'engager dans l'assemblage de turbine (26) et pour supporter celui-ci.

11. Système (10) selon l'une quelconque des revendications précédentes, dans lequel l'assemblage de turbine (26) est adapté pour être au moins en partie désaccouplé de l'élément allongé (22), lorsqu'au moins un élément, l'assemblage de turbine (26) ou l'élément allongé (22), est fixé par rapport à la plate-forme (21).

12. Système (10) selon l'une quelconque des revendications précédentes, dans lequel l'assemblage de turbine (26) est adapté pour être accouplé à l'élément allongé (22) par une connexion temporaire au cours du retrait de l'assemblage de turbine (26) de l'élément allongé (22).

13. Système (10) selon la revendication 12, dans lequel la connexion temporaire est une connexion à libération rapide.

14. Système (10) selon les revendications 12 ou 13, dans lequel la connexion temporaire incorpore un dispositif de serrage.

15. Système (10) selon l'une quelconque des revendications précédentes, dans lequel l'assemblage de turbine (26) englobe une unité de rotor, supportant plusieurs pales (28), et un générateur accouplé à l'unité de rotor.

16. Système (10) selon la revendication 15, dans lequel le générateur est directement entraîné par le rotor.

17. Système (10) selon la revendication 15, dans lequel l'assemblage de turbine (26) englobe un moyen de transmission à accroissement de la vitesse agencé entre le rotor et le générateur.

18. Système (10) selon les revendications 15, 16 ou 17, dans lequel l'assemblage de turbine (26) comprend en outre un mécanisme pour contrôler le pas des pales (28) par rapport à la direction d'écoulement de l'eau dans laquelle l'assemblage de turbine (26) est immergé en service.

19. Système (10) selon la revendication 18, comprenant un système de commande pour assurer l'établissement et le maintien d'un pas de pale optimal.

20. Système (10) selon la revendication 19, dans lequel le système de commande comprend un système d'entraînement à moteur à courant alternatif adapté pour optimiser la puissance de sortie du générateur.

21. Système (10) selon l'une quelconque des revendications précédentes, dans lequel le support de colonne (12) est adapté pour être monté directement sur un lit marin.

22. Système (10) selon l'une quelconque des revendications 1 à 20, dans lequel le support de colonne (12) est adapté pour être noyé dans un lit marin.

23. Système (10) selon l'une quelconque des revendications 1 à 20, dans lequel le support de colonne (12) fait partie d'une structure de flottaison.

24. Système (10) selon l'une quelconque des revendications précédentes, comprenant en outre un dispositif flottant, adapté pour entraîner le pivotement de l'élément allongé (22) sur le support de colonne (12).

25. Système (10) selon la revendication 24, dans lequel le dispositif flottant comprend un élément flottant (140).

26. Système (10) selon la revendication 25, dans lequel l'élément flottant (140) est agencé dans le support de colonne (12).

27. Système (10) selon les revendications 25 ou 26, dans lequel un système de réglage est fixé entre l'élément flottant (140) et au moins un élément, le bras allongé (22) ou l'assemblage de turbine (26).

28. Système (10) selon les revendications 25, 26 ou 27, dans lequel, en service, l'abaissement de l'élément flottant (140) par rapport au support de colonne (12) entraîne le pivotement de l'élément allongé (22), pour déplacer l'assemblage de turbine (26) vers la position surélevée, le soulèvement de l'élément flottant (140) par rapport au support de colonne (12) entraînant le pivotement de l'élément allongé (22), pour déplacer l'assemblage de turbine (26) vers la position abaissée.

29. Système (10) selon l'une quelconque des revendications 24 à 28, dans lequel l'agencement flottant comprend un système de pompage pour assurer le soulèvement et l'abaissement de l'élément flottant (140).

30. Système (10) selon la revendication 29, dans lequel le système de pompage est adapté pour pomper l'eau dans l'élément flottant (140) et à partir de celui-ci, pour varier sa flottabilité.

31. Système (10) selon la revendication 30, dans lequel l'élément flottant (140) est positionné dans le support de colonne (12), l'agencement de pompage étant adapté pour déplacer l'eau de l'intérieur du support de colonne (12) dans l'élément flottant (140), et vice-versa, en vue de soulever et d'abaisser ledit élément flottant (140).

32. Système (10) selon l'une quelconque des revendications précédentes, dans lequel l'assemblage de turbine (26) est au moins partiellement soulevé en contrôlant de manière sélective la flottabilité de l'assemblage de turbine (26).

33. Système (10) selon la revendication 32, dans lequel l'assemblage de turbine (26) comprend une ou plusieurs chambres de flottabilité, adaptées pour être remplies sélectivement d'eau et vidées de celle-ci.

34. Système (10) selon l'une quelconque des revendications précédentes, dans lequel l'assemblage de turbine (26) peut être contrôlé pour permettre la transfert dudit assemblage de turbine (26) par un bateau de remorquage approprié.

35. Système (10) selon l'une quelconque des revendications précédentes, dans lequel l'assemblage de turbine (26) est adapté pour être fixé sur au moins un dispositif de flottaison pour permettre le transport dudit assemblage de turbine (26) par un bateau de remorquage approprié.

36. Système (10) selon l'une quelconque des revendications précédentes, comprenant en outre une structure de support de l'assemblage de turbine, montée sur au moins un élément, l'élément allongé (22) ou l'assemblage de turbine (26), la structure de support de l'assemblage de turbine butant contre le support de colonne (12) lorsque l'assemblage de turbine (26) est agencé dans une position abaissée.

37. Système (10) selon la revendication 36, dans lequel la structure de support de l'assemblage de turbine est adaptée pour être verrouillée contre le support de colonne (12).

38. Système (10) selon l'une quelconque des revendications 1 à 35, comprenant en outre une structure de support de l'assemblage de turbine, montée sur le support de colonne (12), l'assemblage de turbine (26) butant contre la structure de support de l'assemblage de turbine et étant au moins partiellement supportée par celle-ci lorsque l'assemblage de turbine (26) est agencé dans une position abaissée.

39. Système (10) selon l'une quelconque des revendications précédentes, comprenant deux éléments allongés (22) et des assemblages de turbine associés (26).

40. Système (10) selon l'une quelconque des revendications précédentes, dans lequel le système de turbine (26) est un système de turbine à écoulement de marée.

41. Procédé d'établissement d'un accès à un assemblage de turbine (26) d'un système de turbine actionné par un écoulement d'eau, comprenant un support de colonne (12), partiellement et verticalement immergé dans un plan d'eau en écoulement (18), une plate-forme (21) montée sur une partie supérieure du support de colonne (12), s'étendant au-dessus du plan d'eau (18), et un élément allongé (22) supportant l'assemblage de turbine au niveau d'une extrémité et étant accouplé de manière pivotante au niveau d'une autre extrémité au support de colonne (12), le procédé comprenant les étapes ci-dessous :
pivotement de l'élément allongé (22) pour déplacer l'assemblage de turbine (26) d'une position abaissée vers une position surélevée, au-dessus du plan d'eau (18) ; et
fixation d'au moins un élément, de l'élément allongé (22) ou de l'assemblage de turbine (26), sur la plate-forme (21).

42. Procédé selon la revendication 41, dans lequel l'élément allongé (22) est pivoté par le soulèvement et l'abaissement d'un élément flottant (140) accouplé à au moins un élément, l'élément allongé (22) ou l'assemblage de turbine (26), par un système de réglage.

43. Procédé selon les revendications 41 ou 42, comprenant en outre l'étape de variation de la flottabilité de l'assemblage de turbine (26) pour faciliter le déplacement dudit assemblage de turbine (26) vers la position surélevée.
